# EUROPEAN PATENT APPLICATION

(11) **EP 4 818 653 A1**
(43) Date of publication of application: **07.10.2026**
(21) Application number: 25167923.9
(22) Date of filing: 02.04.2025
(51) Int. Cl.: G01F 23/284, G01F 23/80

(54) **SIGNAL PROCESSING FOR MULTI-SENSOR DISTANCE CALCULATION AND LEVEL MEASUREMENT IN A TANK**

(71) Applicant: Rosemount Tank Radar AB, 435 23 Mölnlycke (SE)
(72) Inventor: GRAHN, Marcus, 582 76 LINKÖPING (SE)
(74) Representative: Kransell & Wennborg KB

(57) **Abstract**

Method for determining a fill level in a container (101) using a distance sensor array (102) The method comprising: acquiring (200) distance measurement values from the sensor array; removing (202) measurement values for selected sensor positions using a geometric filter; determining (204) a signal strength for each measurement value and removing measurement values having a signal strength below a threshold; determining (206) at least two quality values for each remaining measurement value, where the quality values are determined based on two or more of standard deviation, signal strength, logical evaluation, and geometric position of the sensor within the sensor array; applying (208) a weighting factor to each quality value and for each measurement value to determine a quality contribution value for each quality value; determining (210) a total quality contribution value for each measurement value by combining the weighted quality values; determining (212) a weighted measurement value for each remaining measurement value as the measurement value combined with the respective total quality contribution value; and determining (214) a final fill level value as an average of the weighted measurement values.

## Description

### Field of the Invention

The present invention relates to multi-sensor for level measurement in a tank. In particular, the present invention is aimed at signal processing for multi-sensor distance calculation and level measurement in a tank.

### Background of the Invention

Fill level measurement in containers is commonly performed using radar level gauges, which determine the distance to a material surface by transmitting electromagnetic waves and measuring the reflected signal. These systems are widely used in industrial applications due to their reliability in various conditions, including high temperatures, pressure variations, and different material properties. However, certain factors such as weak reflections, surface irregularities, and interference from multiple reflections can affect measurement accuracy.

Sensor arrays are increasingly used in fill level measurement, offering advantages over single-point sensors by capturing multiple measurement values across a larger area. This allows for improved accuracy and greater resistance to disturbances such as noise, obstructions, and environmental variations. Depending on the application, sensor arrays may utilize different sensing technologies, including radar, ultrasonic, optical, or capacitive methods.

A key challenge when using sensor arrays is handling the large amount of measurement data they generate. Each sensing element contributes to the overall measurement, and differences in sensor positioning, signal strength, and environmental conditions can lead to variations in the acquired data. Efficient processing of the acquired data is thereby important to ensure accurate and reliable fill level determination in a wide range of industrial applications.

### Summary

In view of the above-mentioned problems, it is an object of the present invention to provide an improved method for processing measurement data from a sensor array to ensure accurate and reliable fill level determination.

According to a first aspect of the invention, there is provided a method for determining a fill level in a container using a sensor array comprising a plurality of sensor elements configured to measure a distance, the method comprising, by level measurement processing circuitry: acquiring a plurality of distance measurement values from the sensor array; removing measurement values for selected sensor positions in the sensor array using a geometric filter; determining a signal strength for each measurement value and removing measurement values having a signal strength below a predefined signal strength threshold value; determining at least two quality values for each remaining measurement value, where the quality values are determined based on two or more of standard deviation, signal strength, logical evaluation, and geometric position of the sensor within the sensor array; applying a weighting factor to each determined quality value and for each measurement value to determine a quality contribution value for each quality value; determining a total quality contribution value for each measurement value by combining the respective weighted quality values; determining a weighted measurement value for each remaining measurement value as the measurement value combined with the respective total quality contribution value; and determining a final fill level value as an average of the weighted measurement values.

The present invention is based on the realization that a structured approach is required for determining a fill level in a container using a sensor array with multiple distance-measuring sensor elements. To enhance accuracy and reliability, the method includes a geometric filtering step that removes measurement values from selected sensor positions within the array which may introduce distortions or contribute less reliable data.

Another feature of the method is the evaluation of signal strength for each measurement value, with values below a predefined threshold being discarded. This ensures that only sufficiently strong signals contribute to the final fill level determination, thereby improving measurement reliability. Additionally, at least two quality values are determined for each remaining measurement, based on factors such as standard deviation, signal strength, logical evaluation, and geometric position within the sensor array. These quality values provide an assessment of the reliability of each measurement and are used to apply weighting factors that emphasize higher-quality data while minimizing the impact of less reliable readings.

A further feature of the method is the computation of a total quality contribution value for each measurement, obtained by combining the weighted quality values. This ensures that multiple quality parameters influence the evaluation of measurement reliability, rather than relying on a single criterion. The method then determines a weighted measurement value for each remaining measurement by combining the measurement value with its respective total quality contribution value, effectively refining the accuracy of the data set used for the final fill level calculation.

An advantage of the described method is the enhancement of measurement precision by systematically filtering, weighting, and refining data before determining the final fill level value. By averaging the weighted measurement values, the method accounts for variations in individual sensor readings while prioritizing the most reliable data points, in turn resulting in a more robust and accurate fill level determination, reducing the influence of noise, weak signals, or outlier measurements.

The method is thereby able to improve the reliability and accuracy of fill level measurement in containers, particularly in environments where signal disturbances, reflections, or surface variations may otherwise compromise measurement precision. The combination of geometric filtering, signal strength evaluation, multi-parameter quality assessment, and weighted averaging ensures that only the most reliable measurement values contribute to the final fill level determination.

According to an example embodiment, the geometric filter is configured to remove measurement values from sensor elements positioned at corner or edge locations within the sensor array. Eliminating data from these sensor positions may reduce the influence of distorted or less reliable measurements, such as reflections from container walls or oblique angles. An effect of filtering out corner and edge measurements is improved accuracy in determining the fill level by ensuring that only sensor data from more optimal positions contributes to the calculation.

According to an example embodiment, the geometric filter is configured to remove measurement values using a predetermined geometric shape overlaying the sensor array. Filtering based on a predefined shape, such as a circular selection, allows for a structured and consistent removal of sensor data that may be less relevant for the fill level determination. Selecting measurement values based on geometric constraints may lead to an improved signal-to-noise ratio by excluding outliers that otherwise could introduce inaccuracies. Moreover, removing the number of measurement values based on a geometric filter will also reduce the computational load during further analysis of the measurement data.

According to an example embodiment, the weighting factors applied to the quality values are determined based on real-world performance characteristics of the sensor array, including sensitivity, noise characteristics, and/or performance of specific sensor elements. Adjusting the weighting factors according to sensor performance ensures that more reliable measurement values have a greater influence on the final level calculation. The effect of dynamically adjusting weighting factors is an improvement in overall measurement accuracy by prioritizing data with higher confidence levels. An advantage of adapting the weighting factors based on sensor performance is the ability to compensate for variations in sensor quality, ensuring consistent and reliable fill level measurements across different operating conditions.

According to an example embodiment, the final fill level value is determined as an average of weighted measurement values having a total quality contribution value above a predetermined threshold value. Excluding measurement values with a low total quality contribution prevents unreliable data from influencing the final calculation. The effect of applying a threshold to the quality contribution values is a reduction in the impact of low-confidence measurements, leading to a more accurate and stable fill level determination. An advantage of filtering out low-quality measurement values is improved robustness against noise and measurement inconsistencies, ensuring that only the most reliable data is used in the final calculation.

According to an example embodiment the method further comprises determining a series of fill level values and applying a moving average filter to the series of fill level values to determine an average fill level value. Smoothing fluctuations in the measurement data reduces the influence of short-term variations caused by noise or temporary disturbances at the surface of the measured product. Applying a moving average filter results in a more stable and gradual representation of the fill level over time, minimizing erratic fluctuations in the output. Smoothing the measurement data thereby enhances reliability in monitoring applications by preventing sudden measurement spikes from causing false readings or unnecessary corrective actions.

According to an example embodiment, the method further comprises determining a series of fill level values and applying a median filter to the series of fill level values to determine an average fill level value. Selecting the median value from a set of measurements reduces the impact of outlier readings that may result from noise, interference, or sudden disturbances at the surface of the measured product. The effect of applying a median filter is an enhanced resistance to measurement anomalies, ensuring that extreme deviations do not disproportionately influence the final fill level value. An advantage of using a median filter is improved accuracy in environments where occasional sensor errors or transient disturbances may occur, providing a more robust measurement approach.

According to an example embodiment, the method further comprises determining a rate of change in the series of fill level values, and if the rate of change exceeds a predetermined rate of change threshold, applying a filter having a forgetting factor to the series of fill level values to determine an average fill level value. Adjusting the filtering behavior based on the detected rate of change allows for more responsive adaptation to rapid variations in the fill level. The effect of applying a forgetting factor when the rate of change is high is an increased sensitivity to recent measurements, ensuring that the fill level determination reflects sudden level changes more accurately. Thereby, using a filter with a forgetting factor leads to improved responsiveness in applications where the fill level may change rapidly, preventing lag in measurement updates while maintaining noise suppression.

According to an example embodiment, the predetermined rate of change threshold is at least 10 mm/s. Defining a specific threshold ensures a consistent and well-calibrated transition between standard filtering and adaptive filtering based on the forgetting factor. Establishing a rate of change threshold provides improved control over measurement adaptation, ensuring that the system responds appropriately to significant level variations while avoiding unnecessary adjustments for minor fluctuations. The rate of change threshold can be set based on properties of a certain measurement environment, thereby improving measurement stability and responsiveness according to the expected dynamics of the monitored container.

According to an example embodiment, the method further comprises determining a min-to-max fill level range in the series of fill level values, and if the min-to-max fill level range exceeds a predetermined range threshold, applying a median filter to the series of fill level values to determine an average fill level value. Evaluating the spread of measured values over time allows for the identification of unstable conditions where additional filtering may be required. Applying a median filter in response to large fluctuations may thereby reduce the influence of extreme values, leading to a more stable and reliable fill level determination, in turn leading to improved measurement robustness in environments where fill level variations may be erratic due to turbulence, foaming, or other unpredictable factors.

According to an example embodiment, the predetermined range threshold is at least 50 mm. Establishing a defined range threshold ensures that additional filtering is applied only when necessary, preventing unnecessary processing in stable conditions. Setting a fixed range threshold may thereby improve consistency in measurement filtering, ensuring that median filtering is activated only when significant variations are detected, thereby improving filtering behavior, balancing measurement stability with sensitivity to real fill level changes.

According to an example embodiment, the method may further comprise assigning a weighting factor for the signal strength quality value that is inversely proportional to a determined sensitivity of the sensor array. When the overall sensitivity of the sensor array is low, a higher weight is assigned to signal strength, making stronger signals more influential in the final calculation. This ensures that under less responsive conditions, high-confidence measurements contribute more significantly to the result. The use of an inverse relationship between signal strength weighting and sensor sensitivity improves accuracy by compensating for reduced detection performance, enabling more reliable fill level determination when operating near the sensor's performance limits.

According to another example embodiment, the method may further comprise assigning a weighting factor for the standard deviation quality value that is proportional to a determined spread in sensor values. A larger spread, which may be determined either during calibration or from statistical evaluation, indicates greater variation and less reliability, leading to a proportionally higher influence of standard deviation in the quality assessment. Using this proportional relationship allows the method to emphasize consistency across sensor readings and reduce the impact of highly variable measurements. Incorporating this approach supports improved robustness by automatically prioritizing more stable data when determining the final fill level.

According to an example embodiment, the method may further comprise determining a weighting factor for the geometric position quality value based on the location of the sensor in the sensor array. Sensor elements closer to the center of the array may be assigned higher weights, while those near corners or edges receive lower weights due to potentially less favorable signal paths or increased likelihood of interference. This enables the method to make use of the full array while still prioritizing the most reliable positions. Combining position-based weighting with geometric filtering, or using either of the two selectively, enhances measurement reliability by tailoring the influence of each sensor element according to its spatial relevance.

According to a second aspect of the invention, there is provided a fill level sensor configured to determine a fill level in a container, the fill level sensor comprising a sensor array comprising a plurality of sensor elements configured to measure a distance; and level measurement processing circuitry configured to: acquire a plurality of fill level measurement values from the sensor array; remove measurement values for selected sensor positions in the sensor array using a geometric filter; determine a signal strength for each measurement value and removing measurement values having a signal strength below a predefined signal strength threshold value; determine at least two quality values for each remaining measurement value, where the quality values are determined based on two or more of standard deviation, signal strength, logical evaluation, and geometric position of the sensor within the sensor array; apply a weighting factor to each determined quality value and for each measurement value to determine a quality contribution value for each quality value; determine a total quality contribution value for each measurement value by combining the respective weighted quality values; determine a weighted measurement value for each remaining measurement value as the measurement value combined with the respective total quality contribution value; and determine a final fill level value as an average of the weighted measurement values

Effects and features of the second aspect of the invention are largely analogous to those described above in connection with the first aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 schematically illustrates an exemplary level sensing system comprising a sensor array;
Fig. 2 is a flow chart outlining steps of a method according to an example embodiment;
Figs. 3A-B schematically illustrate measurement values from a sensor array according to an example embodiment;
Fig. 4 is a diagram schematically illustrating measurement values and according to an example embodiment;
Figs. 5A-C schematically illustrate quality values, weighting factors and fill level values in a method for determining a fill level according to an example embodiment;
Fig. 6 is a diagram schematically illustrating filtering in a method for determining a fill level according to an example embodiment; and
Fig. 7 is a schematic block diagram of level measurement processing circuitry according to an example embodiment.

### Detailed Description of Example Embodiments

The present invention will now be described more fully hereinafter with reference to the accompanying drawings, in which embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. Like reference characters refer to like elements throughout.

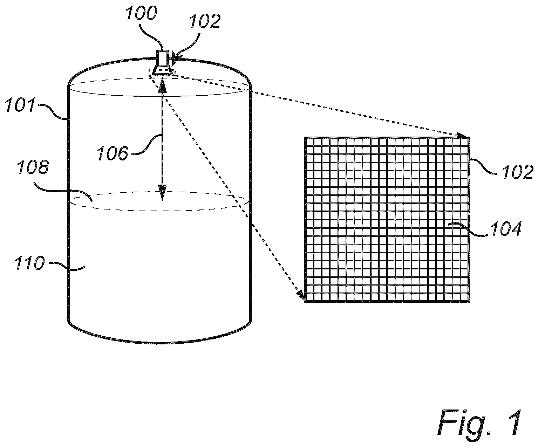

Fig. 1 schematically illustrates an example embodiment of a fill level measurement device 100 configured to determine a fill level in a container. The fill level measurement device 100 comprises a sensor array 102 having a plurality of sensor elements 104 for measuring a distance 106. The sensor array may for example be an optical time-of-flight sensor, a LIDAR (Light Detection and Ranging) or a millimeter-wave (mmW) radar sensor where each sensor element 104 is configured to determine a distance 106 from the sensor element 104 to a surface 108 of the product 110 in the container 101.

The number of sensor elements in the sensor array can range from a few dozen to resolutions of 640×480 or higher in high-resolution optical time-of-flight sensors, which underscores the need for efficient processing of the acquired data.

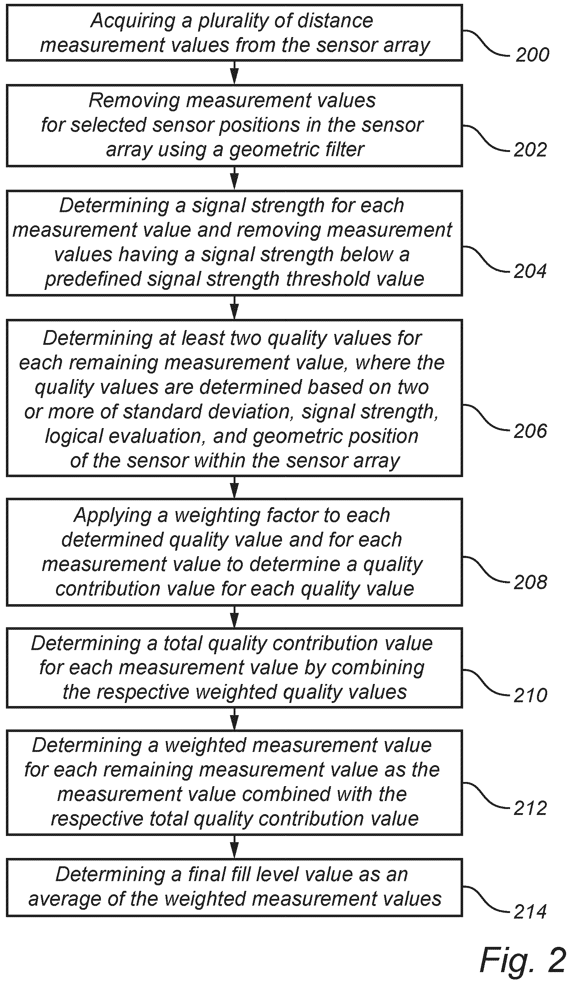

The method for determining the fill level in the container 101 will be described with further reference to the flow chart of Fig. 2 outlining steps of the method.

The method is carried out by level measurement processing circuitry, which processes the data acquired from the sensor array 102. The overall procedure is outlined in the flow chart of Fig. 2, where each operation contributes to refining the raw distance data into an accurate fill level determination. It should be noted that it is not strictly required to perform the operations of the method in the described order, but that there may be advantages of performing certain operations before others as will be described.

The processing begins by acquiring 200 a plurality of distance measurement values from the sensor array 102. Each sensor element 104 measures the distance 106 to the surface 108 of the product 110 inside the container 101. Depending on the sensor technology and resolution, the number of elements may range from several dozen to hundreds of thousands, particularly in high-resolution optical arrays. This results in a dense set of measurement values requiring structured and selective processing.

Next, measurement values corresponding to selected sensor positions are removed 202 using a geometric filter. In the present context, removing a measurement value should be seen as excluding the value from further evaluations. For example, data from corner or edge elements may be excluded, as these positions are more likely to produce unreliable readings due to oblique angles, container geometry, or nearby structures. Applying this geometric filtering helps reduce noise and enhances the relevance of the remaining data.

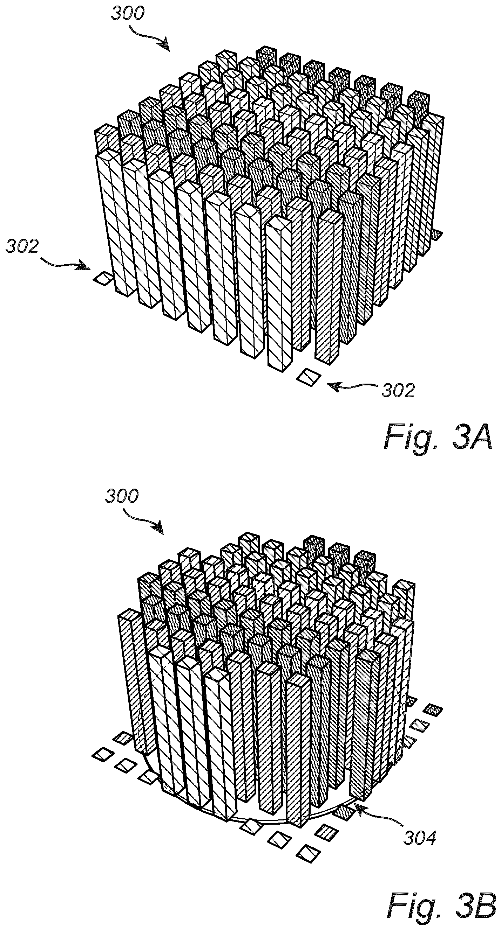

Figs. 3A-B schematically illustrate geometric filtering, where Fig. 3A illustrates an array of measurement values 300 where values from corner sensor elements 302 have been removed. In Fig. 3B, a geometric filter in the form of an approximate circle 304 has been applied to the measurement values 306 so that corner elements and additional adjacent sensor elements are removed from the set of measurement values, and which are thereby excluded from further processing. It would also be possible to use a geometric filter in the form of a circle, rectangle or other shapes where central elements of the sensor array are excluded. Such a filter may for example be relevant to use in situations where reflections occur at central portions of the array or when lens effects occur distorting measurements at central portions of the array.

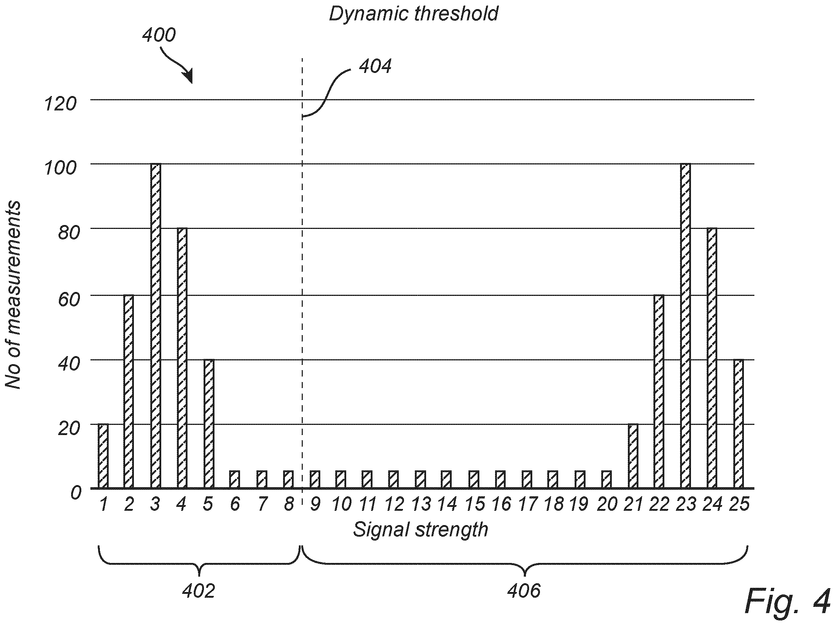

Following geometric filtering, the signal strength is determined 204 and evaluated for each remaining measurement value. Fig. 4 is a histogram 400 schematically illustrating signal strength for a set of measurement values, where measurement values 402 having a signal strength below a predefined threshold 404 are discarded. This ensures that weak or noisy signals, which may be caused by partial reflections or poor surface visibility, do not distort the resulting fill level calculation. Measurement values 406 above the signal strength threshold 404 are kept for further processing, again reducing the computational load for the fill level determination. The signal strength threshold 404 may be dynamically adjusted based on varying measurement conditions, or it may be a fixed threshold set based on known properties of the measurement environment.

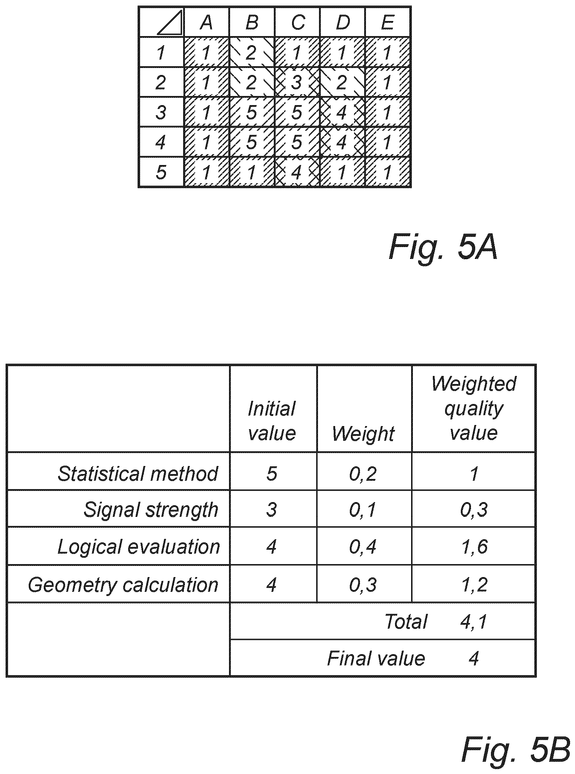

Next, at least two quality values are determined 206 for each remaining measurement as illustrated in Fig. 5A-B. Fig. 5A illustrates example quality values from 1 to 5 for measurements in a 5x5 sensor array. These quality values may be based on the standard deviation of the readings, signal strength, logical evaluation involving configuration parameters, or the geometric position of the sensor element within the array.

Fig. 5B further illustrate how a quality value weighting factor is applied 208 and combined 210 to acquire a final corresponding quality contribution value for each measurement value. For each quality parameter, which in the table of Fig. 5B are Statistical, Signal strength, Logical Evaluation and Geometric calculation, an initial quality value is determined to estimate the quality of a measurement value in view of the respective quality parameter.

Each initial quality value represents an assessment of the reliability of a measurement value based on a specific quality parameter. These quality values are derived using methods tailored to the nature of the parameter in question. For the Statistical parameter, the quality value can be determined based on the standard deviation of the measurement value over time or across multiple similar sensor elements. A low standard deviation indicates a stable and consistent measurement, which results in a high statistical quality value. Conversely, a high standard deviation suggests greater variability or noise, leading to a lower quality assessment.

For the Signal strength parameter, the quality value is based on the measured amplitude or return strength of the sensor signal. Higher signal strength typically corresponds to a clearer and more reliable reflection from the surface, which is assigned a higher quality value. Lower signal strength, which may indicate weak or indirect reflections, is assigned a lower quality value due to the increased likelihood of measurement error.

The Logical Evaluation parameter is based on a set of predefined configuration parameters or contextual rules that define the expected behavior of the measurement. For example, logical evaluation may consider tank dimensions, mounting positions, or historical fill level trends. A measurement value that aligns well with the expected physical or operational conditions is assigned a higher logical quality value. If the value contradicts known constraints or deviates significantly from recent trends, a lower quality value is assigned.

For the Geometric calculation parameter, the quality value is determined based on the physical position of the sensor element within the sensor array. Elements located near the center of the array, which typically provide more direct and reliable measurements, may receive higher quality values. Elements near the edges or corners, which are more susceptible to distortion or indirect reflections, are assigned lower quality values.

At least two of the initial quality values are then weighted using a respective weighting factor, reflecting the relative importance or confidence in the corresponding parameter.

The weighting factors applied to the quality values may be determined based on real-world performance characteristics of the sensor array, allowing the method to account for sensor-specific behavior and operational variability. These characteristics can be obtained through empirical testing, calibration procedures, or historical operational data and may include, for example, sensor sensitivity, signal noise levels, and known performance variations between different sensor elements in the array.

For the signal strength quality parameter, the weighting factor can be derived from the overall sensitivity of the sensor array. If the array exhibits low sensitivity, meaning it requires stronger reflections to produce reliable distance measurements, a higher weight may be assigned to the signal strength parameter. This ensures that measurement values with stronger signals are given greater importance in the overall quality assessment, compensating for the limited sensitivity of the sensor hardware.

For the statistical quality parameter, the weighting factor can be influenced by the observed spread or variability in sensor readings, either during calibration or in ongoing use. For instance, if the sensor array tends to exhibit higher noise levels under specific conditions or for certain sensor elements, the standard deviation parameter may be given a higher weight. This enables the method to place more emphasis on the consistency of measurements when variability is known to be a concern.

In the case of geometric position, performance data may show that certain positions within the sensor array (e.g. corners or edges) produce less reliable measurements. A weighting factor can therefore be applied that reduces the influence of the geometric quality parameter when sensor elements are positioned in less favorable locations. Alternatively, the weighting may be increased to amplify the role of geometric evaluation in compensating for spatial distortions.

By determining weighting factors as described, the method can dynamically adapt to different sensor characteristics and installation scenarios, resulting in a more robust evaluation of measurement quality and contributing to improved accuracy and reliability in the final fill level determination. While the quality values represent the local reliability of a measurement based on specific criteria, the weighting factors define how heavily each of these criteria should influence the final quality assessment. The combination provides a flexible and tunable evaluation model.

In some examples, the quality value and the weighting factor can be combined into one parameter describing the reliability of a measurement value.

As shown in Fig. 5B, the weighted quality values are combined 210 to form a total quality contribution value for each measurement value. This total value provides an overall measure of confidence in the individual measurement and is used to modulate the influence of that measurement in the final fill level determination. In the present example, the total quality contribution value is rounded to the nearest integer, but the direct total quality contribution value may equally well be used.

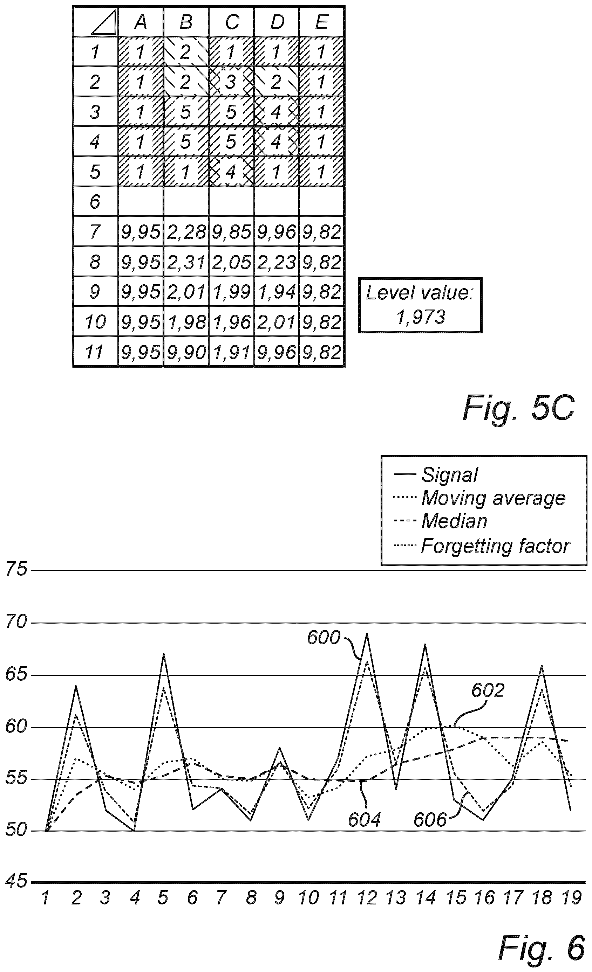

Next, as illustrated in Fig. 5C, each measurement value is combined with its respective total quality contribution value to produce a weighted measurement value, and the fill level is determined 214 by averaging all the weighted measurement values. This averaging produces a final fill level value that reflects a refined and balanced contribution from the entire sensor array, taking into account the signal quality, spatial relevance, and consistency of the underlying data.

According to an example embodiment, the final fill level value may be determined as an average of only those weighted measurement values whose total quality contribution value exceeds a predetermined threshold. This approach introduces a quality-based selection step prior to the final averaging, ensuring that only measurement values assessed to be sufficiently reliable are included in the final calculation.

In Fig. 5C, the final fill level measurement value is determined from measurement values having a minimum total quality contribution of 4. Accordingly, the fill level value is determined as: $\begin{matrix}\left(B9*B3+C9*C3+D9*D3+B10*B4+C10*C4+D10*D4+C11*C5\right) / \\ \left(B3+C3+D3+B4+C4+D4+C5\right)\end{matrix}$

By excluding weighted measurement values with a total quality contribution below the threshold, the method effectively filters out data points that are likely to introduce noise or inaccuracies into the result. Such low-quality values may arise from weak signal strength, high statistical variability, inconsistent geometric positioning, or logical inconsistency with known configuration parameters. The predetermined threshold can be defined based on system calibration, empirical testing, or operational experience, and may be adjusted to suit different measurement environments or container configurations.

At each stage of the method where measurement values are excluded from further processing, factors such as the performance capabilities of the processing circuitry may be considered in relation to the required calculation time for determining the final fill level value. This allows the method to adjust the number of measurement values removed at different stages, enabling a balanced trade-off between processing speed and measurement accuracy based on the specific requirements of the implementation.

According to an example embodiment illustrated in Fig. 6, additional filtering may be applied to a series of fill level values 600 over time to further refine the output and increase the stability of the measurement result. This temporal filtering is applied after the spatial evaluation and weighting of the individual measurement values from the sensor array.

In one implementation, a moving average filter 602 is applied to the series of fill level values 600. This filter smooths short-term fluctuations by averaging a set number of the most recent fill level values. Applying the moving average reduces noise and minor disturbances in the data stream, resulting in a gradual and stable fill level trend that is well-suited for applications with relatively slow or steady changes in surface level.

Alternatively, a median filter 604 may be used to process the series of fill level values. The median filter selects the middle value within a defined window of recent measurements, effectively rejecting outlier values that may result from temporary measurement anomalies. This approach is particularly useful in environments where sporadic disturbances, such as reflections from foam or floating debris, may cause transient spikes or drops in the measured fill level.

In another embodiment, a filter having a forgetting factor 606 is applied when the rate of change in the series of fill level values exceeds a predetermined threshold. The rate of change is determined based on the variation between successive fill level measurements. If this rate surpasses a defined limit, such as in the case of rapidly rising or falling levels, the forgetting factor filter responds by prioritizing more recent values while gradually reducing the influence of older data. This enables the system to react more quickly to genuine, rapid changes in the fill level without being overly sensitive to noise.

By selecting and applying one of these filters based on the characteristics of the fill level data, the method adapts to different process conditions-favoring stability under normal circumstances, robustness against outliers in disturbed conditions, and responsiveness during dynamic changes. Fig. 6 illustrates the conceptual application of these three filter types to the series of fill level values, emphasizing how they contribute to an accurate and context-sensitive final output.

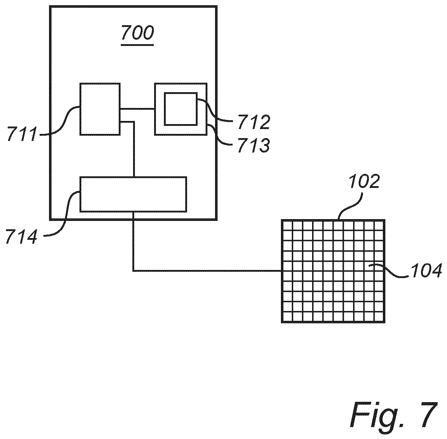

Fig. 7 illustrates a fill level sensor 700 according to an embodiment. The steps of a method performed by the computer system 700 are in practice performed by level measurement processing circuitry 711 embodied in the form of one or more microprocessors arranged to execute a computer program 712 downloaded to a non-transitory computer readable storage medium 713 associated with the microprocessor, such as a Random Access Memory (RAM), a Flash memory or a hard disk drive. The processing circuitry 711 is arranged to cause the computer system 700 to carry out the method according to embodiments when the appropriate computer program 712 comprising computer-executable instructions is downloaded to the storage medium 713 and executed by the processing circuitry 711. The storage medium 713 may also be a computer program product comprising the computer program 712. Alternatively, the computer program 712 may be transferred to the storage medium 713 by means of a suitable computer program product, such as a Digital Versatile Disc (DVD) or a memory stick. As a further alternative, the computer program 712 may be downloaded to the storage medium 713 over a network. The processing circuitry 711 may alternatively be embodied in the form of a digital signal processor (DSP), an application specific integrated circuit (ASIC), a field-programmable gate array (FPGA), a complex programmable logic device (CPLD), etc. The fill level sensor 700 further comprises a communication interface 714 (wired or wireless) over which it is configured to transmit and receive data.

Even though the invention has been described with reference to specific exemplifying embodiments thereof, many different alterations, modifications and the like will become apparent for those skilled in the art. Also, it should be noted that parts of the system and method may be omitted, interchanged or arranged in various ways, the system and method yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. Method for determining a fill level in a container (101) using a sensor array (102) comprising a plurality of sensor elements (104) configured to measure a distance (106), the method comprising, by level measurement processing circuitry (714):
acquiring (200) a plurality of distance measurement values from the sensor array;
removing (202) measurement values for selected sensor positions in the sensor array using a geometric filter;
determining (204) a signal strength for each measurement value and removing measurement values having a signal strength below a predefined signal strength threshold value;
determining (206) at least two quality values for each remaining measurement value, where the quality values are determined based on two or more of standard deviation, signal strength, logical evaluation, and geometric position of the sensor within the sensor array;
applying (208) a weighting factor to each determined quality value and for each measurement value to determine a quality contribution value for each quality value;
determining (210) a total quality contribution value for each measurement value by combining the respective weighted quality values;
determining (212) a weighted measurement value for each remaining measurement value as the measurement value combined with the respective total quality contribution value; and
determining (214) a final fill level value as an average of the weighted measurement values.

2. The method according to claim 1, wherein the geometric filter is configured to remove measurement values from sensor elements positioned at corner or edge locations within the sensor array.

3. The method according to claim 1, wherein the geometric filter is configured to remove measurement values using a predetermined geometric shape overlaying the sensor array.

4. The method according to any one of the preceding claims, wherein the weighting factors applied to the quality values are determined based on real-world performance characteristics of the sensor array, including sensitivity, noise characteristics, and/or performance of specific sensor elements.

5. The method according to any one of the preceding claims, wherein the final fill level value is determined as an average of weighted measurement values having a total quality contribution value above a predetermined threshold value.

6. The method according to any one of the preceding claims, further comprising determining a series of fill level values (600), and applying a moving average filter (602) to the series of fill level values to determine an average fill level value.

7. The method according to any one of the preceding claims, further comprising determining a series of fill level values, and applying a median filter (604) to the series of fill level values to determine an average fill level value.

8. The method according to any one of the preceding claims, further comprising determining a rate of change in the series of fill level values, and if the rate of change exceeds a predetermined rate of change threshold, applying a filter having a forgetting factor (606) to the series of fill level values to determine an average fill level value.

9. The method according to any claim 8, wherein the predetermined rate of change threshold is at least 10 mm/s.

10. The method according to any one of the preceding claims, further comprising determining a min-to-max fill level range in the series of fill level values, and if the min-to-max fill level range exceeds a predetermined range threshold, applying a median filter to the series of fill level values to determine an average fill level value.

11. The method according to any claim 6, wherein the predetermined range threshold is at least 50 mm.

12. The method according to any one of the preceding claims, wherein a weighting factor for a signal strength quality value is inversely proportional to a determined sensitivity of the sensor array.

13. The method according to any one of the preceding claims, wherein a weighting factor for a standard deviation quality value is proportional to a determined spread in sensor values.

14. The method according to any one of the preceding claims, wherein a weighting factor for a geometric position quality value is determined based on a location of the sensor in the sensor array.

15. A fill level sensor (700) configured to determine a fill level in a container, the fill level sensor comprising a sensor array (102) comprising a plurality of sensor elements (104) configured to measure a distance (106); and level measurement processing circuitry (711) configured to:
acquire a plurality of fill level measurement values from the sensor array;
remove measurement values for selected sensor positions in the sensor array using a geometric filter;
determine a signal strength for each measurement value and removing measurement values having a signal strength below a predefined signal strength threshold value;
determine at least two quality values for each remaining measurement value, where the quality values are determined based on two or more of standard deviation, signal strength, logical evaluation, and geometric position of the sensor within the sensor array;
apply a weighting factor to each determined quality value and for each measurement value to determine a quality contribution value for each quality value;
determine a total quality contribution value for each measurement value by combining the respective weighted quality values;
determine a weighted measurement value for each remaining measurement value as the measurement value combined with the respective total quality contribution value; and
determine a final fill level value as an average of the weighted measurement values.
